# EUROPÄISCHE PATENTSCHRIFT

(11) **EP 3 337 684 B1**
(45) Veröffentlichungstag und Bekanntmachung des Hinweises auf die Patenterteilung: **10.07.2019**
(21) Anmeldenummer: 15753027.0
(22) Anmeldetag: 19.08.2015
(51) Int. Cl.: B60K 23/08, B60K 25/00

(54) **SYSTEM ZUR BETÄTIGUNG EINER KUPPLUNG**
SYSTEM FOR ACTUATING A CLUTCH
SYSTEME D'ACTIONNEMENT D'UN EMBRAYAGE

(43) Veröffentlichungstag der Anmeldung: 27.06.2018
(73) Patentinhaber: GKN AUTOMOTIVE LTD., Redditch Worcestershire B98 0AJ (GB)
(72) Erfinder: MÖHLMANN, Reinhard, 51467 Bergisch Gladbach (DE)
(74) Vertreter: Bungartz Christophersen Partnerschaft mbB Patentanwälte
(86) Internationale Anmeldenummer: PCT/EP2015/069021
(87) Internationale Veröffentlichungsnummer: WO 2017/028913

(56) Entgegenhaltungen:
- WO-A1-2013/038446
- DE-A1-102009 005 378
- US-A- 4 915 190
- US-A1- 2012 234 120

## Beschreibung

Die Erfindung betrifft ein System zur Betätigung einer Kupplungsvorrichtung einer Einrichtung zur Leistungsübertragung und/oder Leistungsverteilung der Antriebsleistung eines Kraftfahrzeugs, insbesondere eines Automobils bzw. Personenkraftwagens, wobei die Einrichtung zur Leistungsübertragung und/oder Leistungsverteilung
- Primärantriebsglieder aufweist, die bei bestimmungsgemäßer Installation und Verwendung der Einrichtung zur Leistungsübertragung und/oder Leistungsverteilung am Kraftfahrzeug bei Fahrt permanent angetrieben oder geschleppt sind, und
- Sekundärantriebsglieder aufweist, die bei bestimmungsgemäßer Installation und Verwendung der Einrichtung zur Leistungsübertragung und/oder Leistungsverteilung am Kraftfahrzeug im Bedarfsfall mittels einer Kupplungsvorrichtung mit den Primärantriebsgliedern verkoppelt oder von den Primärantriebsgliedern entkoppelt werden können,
und wobei die Kupplungsvorrichtung eine Kupplungsbetätigungseinrichtung mit einer Ausrückeinheit zur Entkopplung von Primär- und Sekundärantriebsgliedern umfasst.

Die Erfindung betrifft ferner eine Einrichtung zur Leistungsübertragung und/oder Leistungsverteilung der Antriebsleistung eines Kraftfahrzeugs mit einem solchen System zur Betätigung einer Kupplungsvorrichtung sowie ein Kraftfahrzeug mit einem eine derartige Einrichtung umfassenden Antriebsstrang.

In jüngerer Zeit werden von Fahrzeugherstellern und Zulieferern zunehmend Antriebsstrangkonzepte mit zuschaltbarem Allradantrieb entwickelt. Derartige Antriebsstrangkonzepte, denen sich die Erfindung insbesondere widmet, weisen einen Primärantriebsstrang auf, über den die permanent angetriebene Primärachse und die hiermit verbundenen Primärantriebsräder angetrieben werden, sowie einen zuschaltbaren Sekundärantriebsstrang, der eine Sekundärachse mit Sekundärantriebsrädern umfasst und der im Bedarfsfall dem Primärantriebsstrang zugeschaltet (Einrückvorgang bzw. "Connect"-Vorgang) bzw. von diesem entkoppelt werden kann (Ausrückvorgang bzw. "Disconnect"-Vorgang).

Bei zugeschaltetem Sekundärantriebsstrang wird die von dem Antriebsaggregat des Kraftfahrzeugs zur Verfügung gestellte Antriebsleistung mittels Einrichtungen zur Leistungsübertragung und/oder Leistungsverteilung, zum Beispiel mittels einer PTU (Power-Takeoff-Unit) und einer RDU (Rear-Drive-Unit), sowohl auf die Primärantriebsräder als auch auf die Sekundärantriebsräder verteilt (Betrieb des Fahrzeugs im 4-WD Modus oder "Connect"-Modus). Bei vom Primärantriebsstrang entkoppeltem Sekundärantriebsstrang werden hingegen nur die Primärantriebsräder angetrieben (Betrieb des Fahrzeugs im 2-WD Modus oder "Disconnect"-Modus). Die Sekundärantriebsräder rollen bei Fahrt auf der Straße ab, ohne zum Vortrieb beizutragen.

Bei derartigen Antriebssträngen wird angestrebt, die Komponenten des Sekundärantriebsstrangs im 2-WD Modus möglichst umfassend sowohl von der Primärachse als auch von den bei Fahrt auf der Straße abrollenden Sekundärantriebsrädern zu entkoppeln, so dass bei dieser Betriebsart möglichst viele Komponenten des Sekundärantriebsstrangs weder vom Primärantriebsstrang noch von den Sekundärantriebsrädern geschleppt werden. Die von den Sekundärantriebsgliedern verursachte Verlustleistung wird so weitgehend minimiert. Die im 2-WD Modus stillgelegten Komponenten werden im Rahmen dieser Anmeldung als Sekundärantriebsglieder bezeichnet wohingegen die permanent rotierenden Komponenten des Gesamtantriebsstrangs einschließlich der Komponenten, die mit den auf der Straße abrollenden Sekundärantriebsrädern rotieren, als Primärantriebsglieder bezeichnet werden.

Derartige Antriebsstrangkonzepte benötigen daher zum einen eine Kupplungsvorrichtung, die dazu dient, Sekundärantriebsstrangkomponenten mit dem permanent angetriebenen Primärantriebsstrang zu koppeln oder von diesem zu entkoppeln (Schnittstelle zum Primärantriebsstrang). Zum anderen ist eine Kupplungsvorrichtung vorzusehen, die die Sekundärantriebsstrangkomponenten mit den Sekundärantriebsrädern bzw. den von den Sekundärantriebsrädern durch Abrollen auf der Straße mitgeschleppten Komponenten des Sekundärantriebsstrangs verbindet bzw. wieder von diesen trennt (Schnittstelle zum Sekundärantriebsrad). Nur wenn derartige Kupplungsvorrichtungen vorgesehen sind, lässt sich ein Teil des Sekundärantriebsstrangs, nämlich der zwischen den beiden Kupplungsvorrichtungen bzw. Schnittstellen liegende Teil, vollständig stilllegen, da dieser bei Fahrt weder vom permanenten Primärantriebsstrang noch von den bei Fahrt auf der Straße abrollenden Sekundärantriebsrädern angetrieben bzw. geschleppt wird.

Den Kupplungen sind Systeme zur Kupplungsbetätigung zugeordnet, welche den eigentlichen Kupplungsvorgang, also insbesondere das Ein- bzw. Ausrücken der Kupplung, durchführen. Die Einleitung eines Kupplungsvorgangs erfordert Energie, die im Zeitpunkt der Kupplungsbetätigung zur Verfügung stehen muss, um eine den Kupplungsvorgang durchführende Kupplungsbetätigungskraft bereitstellen zu können.

Es ist bekannt, zur Kupplungsbetätigung Elektromotoren, elektromechanische oder elektromagnetisch betätigte Aktuatoren oder Hydraulikpumpen und hydraulisch betätigte Aktuatoren einzusetzen, die den Kupplungsmechanismus betätigen bzw. die für den Kupplungsvorgang benötigte Kupplungsbetätigungskraft aufbringen.

Elektromotoren oder elektrisch betätigte Aktuatoren und gegebenenfalls die zu deren Versorgung und Steuerung erforderlichen Kabelbäume und Steuereinrichtungen haben ein verhältnismäßig hohes Gewicht, nehmen viel Bauraum ein und können - insbesondere wenn sie hohe Ströme ziehen - zu elektromagnetisch bedingten Störungen führen.

Hydraulikpumpen müssen zur Erzeugung des für den Kupplungsvorgang erforderlichen Hydraulikdrucks angetrieben werden und verursachen so Verlustleistung.

Ein gattungsgemässes System ist aus DE102009005378 bekannt.

Aufgabe der Erfindung ist es, ein System zur Betätigung einer Kupplungsvorrichtung zur Verfügung zu stellen, das eine geringe Energieaufnahme erfordert, insbesondere mit geringerer Stromstärke als Elektromotoren oder elektrische Aktuatoren auskommt. Ferner soll die Kupplungsbetätigungseinrichtung ein geringes Risiko für elektromagnetische Störungen, ein geringes Gewicht und einen geringen Bauraumbedarf aufweisen. Sie soll in der Lage sein, die Kupplung spontan und mit geringer und von der Fahrzeuggeschwindigkeit unabhängiger Ansprechzeit zu betätigen sowie eine hohe Kupplungsbetätigungskraft zur Verfügung stellen. Die Konzeption soll derart sein, dass sie für eine Vielzahl verschiedener Kupplungsvarianten einsetzbar ist.

Die Erfindung sieht hierzu unter anderem vor, dass die Ausrückeinheit zur Bereitstellung der für die Betätigung der Kupplungsvorrichtung erforderlichen Kupplungsbetätigungskraft mit den Sekundärantriebsgliedern in Wirkverbindung steht. Alternativ oder zusätzlich hierzu kann vorgesehen sein, dass eine Antriebskupplung vorgesehen ist, die zur Bereitstellung der für die Betätigung der Kupplungsvorrichtung erforderlichen Kupplungsbetätigungskraft eine Wirkverbindung zwischen den Primärantriebsgliedern oder den Sekundärantriebsgliedern einerseits und der Ausrückeinheit andererseits herzustellen vermag.

In beiden vorgenannten Fällen ist dafür gesorgt, dass die Ausrückeinheit, die insbesondere eine für den Kupplungsvorgang anzutreibende Hydraulikpumpe umfassen kann, keine dauernde Verlustleistung verursacht, wenn die Sekundärantriebsglieder von der Primärachse und den Sekundärantriebsrädern entkoppelt sind und bestimmungsgemäß still stehen.

Steht die Ausrückeinheit mit den Sekundärantriebsgliedern in Wirkverbindung und sind die Sekundärantriebsglieder im 2-WD Modus stillgelegt, kann die Ausrückeinheit zur Erzeugung einer Kupplungsbetätigungskraft keine Leistung von den still stehenden Sekundärantriebsgliedern abgreifen. Die Komponenten der Ausrückeinheit, etwa die bereits angesprochene Hydraulikpumpe, laufen nicht mit, sondern stehen ebenfalls still und verursachen keinerlei Verlustleistung.

Bei Verwendung einer Antriebskupplung zur Herstellung einer Wirkverbindung zwischen Sekundär- oder Primärantriebsgliedern einerseits und Ausrückeinheit andererseits sind die Kupplungsbetätigungseinrichtung bzw. deren Komponenten ebenfalls stillgelegt und verursachen keine Verlustleistung. Für den Fall, dass die Antriebskupplung zwischen bei Fahrt permanent rotierenden Primärantriebsgliedern und Kupplungsbetätigungseinrichtung angeordnet ist, gilt dies selbstverständlich nur bei geöffneter Antriebskupplung. Bei zwischen Sekundärantriebsgliedern und Ausrückeinheit angeordneter Antriebskupplung entsteht der zusätzliche Vorteil, dass die Kupplungsbetätigungseinrichtung selbst im 4-WD Modus und trotz mitrotierender Sekundärantriebsglieder keine Verlustleistung verursacht, solange die Antriebskupplung nicht angesteuert ist und somit kein Drehmoment überträgt.

Die Kupplungsvorrichtung zum Verkoppeln bzw. Entkoppeln von den Primär- und Sekundärantriebsgliedern ist bevorzugt eine formschlüssig wirkende Kupplung (auch als Dog-Clutch bezeichnet), insbesondere eine Klauenkupplung oder eine Kupplung mit einer Primär- und Sekundärantriebsglieder formschlüssig verbindenden Schiebemuffe, die zwischen einer Connect-Position, in der die Primär- und Sekundärantriebsglieder formschlüssig miteinander verbunden sind, und einer Disconnect-Position, in der die Primär- und Sekundärantriebsglieder voneinander getrennt sind, hin und her bewegbar ist.

Bei der Antriebskupplung handelt es sich bevorzugt um eine On-Demand schaltbare Antriebskupplung. Um zu gewährleisten, dass die Antriebskupplung selbst keine oder nur vernachlässigbare Verlustleistung verursacht, kann insbesondere eine berührungsfrei arbeitende Kupplung vorgesehen sein. Hierbei kann es sich bevorzugt um eine berührungsfrei arbeitende Magnetkupplung handeln. Ein weiteres Beispiel für eine derartige Antriebskupplung ist eine Wirbelstromkupplung.

Der Einsatz einer derartigen berührungslos arbeitenden und bevorzugt elektrisch ansteuerbaren Kupplung kann auch deshalb als besonders vorteilhaft angesehen werden, weil das von einer derartigen Kupplung gewährleistete Drehmomentübertragungspotential begrenzt ist. Eine derartige Antriebskupplung kann so zum Beispiel bei Einsatz einer Hydraulikpumpe zur Bereitstellung eines die Kupplungsbetätigungskraft gewährleistenden Hydraulikdrucks effektiv als Druckbegrenzer oder Überlastschutz eingesetzt werden. Ferner ermöglicht eine derartige Kupplung eine effektive Druckbegrenzung in beiden Fahrrichtungen bzw. Rotationsrichtungen der Kupplungsglieder.

Zudem ist das Drehmomentübertragungspotential einer derartigen Antriebskupplung von der Bestromung der Kupplung abhängig und ist somit durch eine gezielte Bestromung gezielt einstellbar. Durch die Einstellung des Drehmomentübertragungspotentials über den der Kupplung zugeführten Strom lässt sich somit das auf die Ausrückeinheit übertragbare und die Höhe der Kupplungsbetätigungskraft bestimmende Drehmoment nicht nur effektiv begrenzen, sondern bei Bedarf auch gezielt einregeln. Die Kupplungsbetätigungskraft und die Geschwindigkeit des Druckaufbaus und somit auch die Schnelligkeit des Einrück- bzw. Ausrückvorgangs können gezielt beeinflusst werden. Auch ist ein nahtloses, ruckfreies Ein- und Auskuppeln möglich.

Für den Einrückvorgang weist die Kupplungsbetätigungseinrichtung bevorzugt neben der Ausrückeinheit auch eine Einrückeinheit auf. Die Einrückeinheit gewährleistet das Einrücken der Kupplungsvorrichtung und damit das Zuschalten des im 2-WD bzw. Disconnect-Modus stillgelegten Teils des Sekundärantriebsstrangs zur Primärachse und zu den im von den Sekundärantriebsrädern geschleppten Komponenten zu den Primärantriebsgliedern.

Die Einrückeinheit weist bevorzugt ein für den Einrückvorgang potentielle Energie vorhaltendes Vorspannelement auf. Dieses gewährleistet, dass die für den Einrückvorgang benötigte Kupplungskraft durchgängig bereitgehalten ist. Als Vorspannelement kommt insbesondere ein Federelement in Betracht.

Um das Vorspannelement insbesondere auch dann auf Spannung (in einer die potentielle Energie bereithaltenden Position) zu halten, wenn die Kupplungsvorrichtung nicht mit einem rotierenden Teil des Antriebsstrangs in Wirkverbindung steht und daher keine Kupplungsbetätigungskraft neu generieren kann, kann die Ausrückeinheit ein Rückhalteelement aufweisen, das die Kupplung mittels einer Rückhaltekraft während des Betriebs des Fahrzeugs im 2-WD Modus in ausgerückter Position (Disconnect-Position) hält.

Das Rückhalteelement ist dabei bevorzugt derart ausgebildet, dass es die Kupplungsvorrichtung während des Betriebs des Fahrzeugs im 2-WD Modus ohne andauernde Energiezufuhr und somit dauerhaft verlustleistungsfrei in der Disconnect-Position zu halten vermag und es aktiv angesteuert werden muss, beispielsweise bestromt oder auf sonstige Weise aktiviert werden muss, wenn es die im Vorspannelement gespeicherte Energie zur Initiierung des Einrückvorgangs durch Aufgabe der Rückhaltekraft freigeben soll. Energie wird daher nur für den eigentlichen Kupplungsvorgang, also das Ein- bzw. Ausrücken benötigt, nicht aber für das Halten des Kupplungszustands im Connect- bzw. Disconnect-Modus. Als Rückhaltevorrichtung kommt insbesondere ein elektrisch ansteuerbarer Magnethalter mit einem Dauermagneten in Betracht.

Die vorstehend beschriebene Ausgestaltung der Einrückeinheit gewährleistet zudem die Initiierung und Durchführung des Einrückvorgangs unabhängig von der zur Verfügung stehenden "Energiedichte" des gerade vorherrschenden Fahrzustands, also insbesondere unabhängig von der Fahrzeuggeschwindigkeit, da die vom Vorspannelement bereitgehaltene potentielle Energie fahrzustandsunabhängig konstant ist. Der Fahrer empfindet den Einrückvorgang daher fahrzustandsunabhängig stets als gleich schnell ablaufend, unabhängig davon, wie schnell er gerade fährt.

Weiter gewährleistet die vorstehende Ausgestaltung, dass das System zur Betätigung einer Kupplungsvorrichtung bi-stabil ausgeführt sein kann. Dies bedeutet, dass weder zum dauerhaften Halten des 2-WD bzw. Disconnet-Modus noch zum dauerhaften Halten des 4-WD bzw. Connect-Modus Energie aufgebracht werden muss, sondern die jeweiligen Zustände energiezuführungsfrei gehalten werden. Lediglich zur Initiierung und Durchführung eines Ein- oder Ausrückvorgangs ist das Bereitstellen von Energie zur Erzeugung einer Kupplungsbetätigungskraft erforderlich.

Es sei angemerkt, dass die Einrückeinheit und die Ausrückeinheit keine vollständig voneinander getrennten Vorrichtungen sein müssen. Vielmehr können sich beide Einheiten auch Komponenten und deren Funktionen teilen.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: in schematischer Darstellung einen Gesamtantriebsstrang eines Kraftfahrzeugs gemäß dem Stand der Technik mit permanent angetriebenem Primärantriebsstrang und mit einem bei Bedarf dem Primärantriebsstrang zuschaltbaren oder von diesem entkoppelbaren Sekundärantriebsstrang,
- Fig. 2: eine PTU (Power-Takeoff-Unit) gemäß dem Stand der Technik und wie sie bei dem in Figur 1 gezeigten Antriebsstrang zum Einsatz kommen kann,
- Fig. 3: eine RDU (Rear-Drive-Unit) gemäß dem Stand der Technik und sie bei dem in Figur 1 gezeigten Antriebsstrang zum Einsatz kommen kann,
- Fig. 4: eine bi-stabile Kupplungsbetätigungseinrichtung in schematischer Darstellung mit einer Ausrückeinheit und einer Einrückeinheit und einer zwischen einem Primär- oder Sekundärantriebsglied und einer Stellgrößeneinheit wirkenden Antriebskupplung,
- Fig. 5: eine Abwandlung der in Figur 4 gezeigten Ausführungsform in schematischer Darstellung mit einer direkten Verbindung zwischen Sekundärantriebsglied und Stellgrößeneinheit sowie mit einem zusätzlichen Druckbegrenzungsventil,
- Fig. 6: eine bi-stabile Kupplungsbetätigungseinrichtung in schematischer Darstellung mit einem zweifach wirkenden Kupplungsaktuator und einem bi-stabilen Rückhalteelement und einer zwischen einem Primär- oder Sekundärantriebsglied und einer Stellgrößeneinheit wirkenden Antriebskupplung, und
- Fig. 7: eine Abwandlung der in Figur 6 gezeigten Ausführungsform in schematischer Darstellung mit einer direkten Verbindung zwischen Sekundärantriebsglied und Stellgrößeneinheit sowie mit einem zusätzlichen Druckbegrenzungsventil.

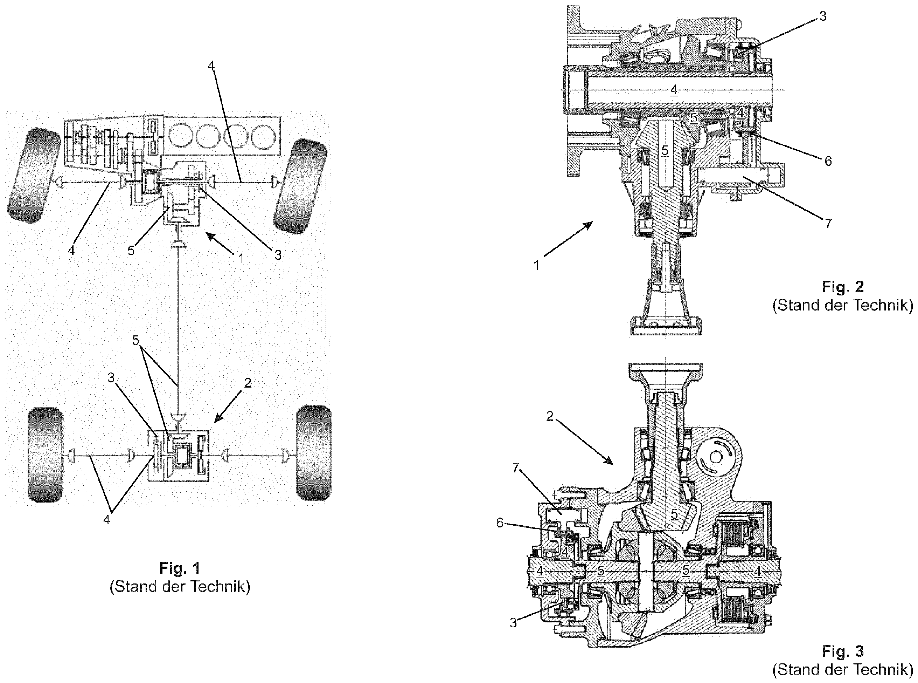

In Figur 1 ist ein aus dem Stand der Technik bekannter Antriebsstrangaufbau mit permanent angetriebenem Primärantriebsstrang - in Figur 1 beispielhaft der von einem Frontmotor permanent angetriebene und die Antriebsleistung auf die Vorderräder leitende Teil des Gesamtantriebstrangs - und einem nur im Bedarfsfall angetriebenen Sekundärantriebsstrang, über den die Antriebsleistung im Bedarfsfall auch zu den Sekundärantriebsrädern geleitet wird, gezeigt. Selbstverständlich sind auch andere Antriebsstrangkonfigurationen, bei denen die primär angetriebene Achse zum Beispiel die Hinterachse ist und/oder bei der ein Heck- oder Mittelmotor zum Einsatz kommt, denkbar.

Im 4-WD bzw. Connect-Modus wird über eine PTU 1, die im Detail in Figur 2 gezeigt ist, Antriebsleistung am Primärantriebsstrang abgegriffen und über eine Kardanwelle zu einer RDU 2, die im Detail in Figur 3 gezeigt ist, weitergeleitet, welche die Aufgabe eines Querausgleichs übernimmt und die Antriebsleistung auf die beiden Sekundärantriebsräder überträgt. PTU und RDU stellen jeweils eine Einrichtung zur Leistungsübertragung und/oder Leistungsverteilung der Antriebsleistung im Sinne der Erfindung dar.

Sowohl an der PTU 1 als auch an der RDU 2 ist jeweils eine formschlüssig wirkende Kupplungsvorrichtung 3 vorgesehen, mit der Primärantriebsglieder 4 und Sekundärantriebsglieder 5 der PTU bzw. der RDU miteinander verkoppelt oder voneinander entkoppelt werden können. Eine hydraulische Aktuierung 7 verschiebt als Teil einer Ausrückeinheit der Kupplungsbetätigungseinrichtung hierzu eine Schiebemuffe 6 zwischen einer Connect-Position (Primär- und Sekundärantriebsglieder sind miteinander verkoppelt) und einer Disconnect-Position (Primär- und Sekundärantriebsglieder sind voneinander entkoppelt).

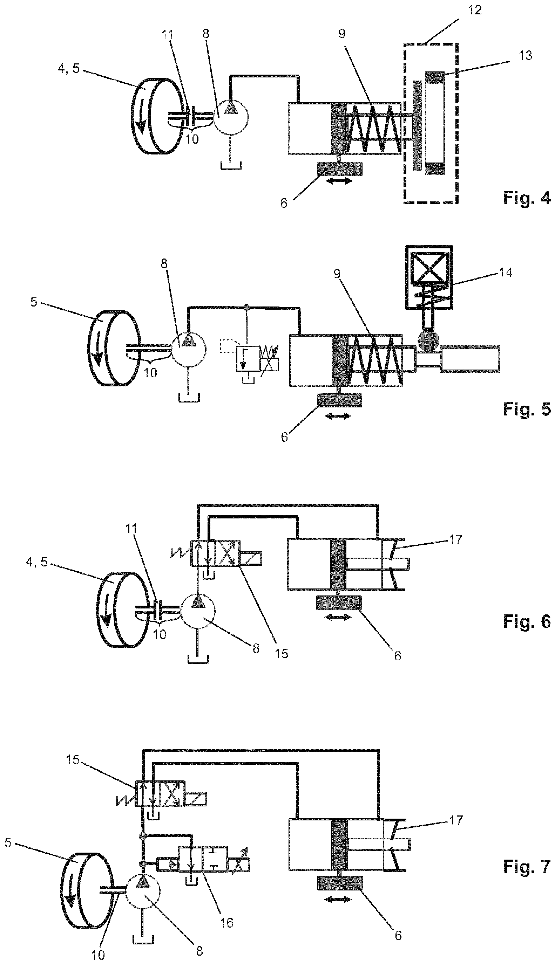

Figuren 4 bis 7 zeigen in einer schematischen Darstellung eine Kupplungsbetätigungseinrichtung gemäß der Erfindung, wie sie bei einem Antriebsstrang bzw. einer der in Figur 2 oder Figur 3 gezeigten Einrichtungen zur Leistungsübertragung und/oder Leistungsverteilung der Antriebsleistung zum Einsatz kommen kann. Die in den Figuren 4 bis 7 gezeigte Schiebemuffe 6 entspricht in ihrer Funktion der in Figur 2 und Figur 3 gezeigten Schiebemuffe 6 und ist über eine hydraulische Aktuierung 7 von einer Connect-Position in eine Disconnect-Position verschiebbar (angedeutet durch die Doppelpfeile unterhalb der Schiebemuffe 7). Es können auch nicht hydraulisch wirkende Aktuierungen zum Einsatz kommen.

Die hydraulische Aktuierung 7 wird mit einem von einer Hydraulikpumpe 8 erzeugten Hydraulikdruck versorgt, um die Schiebemuffe 6 gegen die Kraft einer als Vorspannelement fungierenden Feder 9 von einer Connect-Position in eine Disconnect-Position zu verlagern und so einen Ausrückvorgang der Kupplung zu vollziehen. Die Hydraulikpumpe 8 stellt als Teil einer Ausrückeinheit eine Stellgrößeneinheit dar, die eine zur Erzeugung einer Kupplungsausrückkraft dienende Stellgröße (hier: hydraulischen Druck) bereitstellt. Für die Erfindung ist selbstverständlich grundsätzlich auch die Verwendung andersartiger anderer Stellgrößeneinheiten, die andersartige Stellgrößen bereitstellen, denkbar. Insbesondere kann anstelle einer durch eine Antriebskupplung angetriebenen Hydraulikpumpe eine elektromagnetische Kupplung vorgesehen sein, die einen Rampenmechanismus antreibt.

Die Hydraulikpumpe 8 (die Stellgrößeneinheit der Kupplungsvorrichtung) steht über eine Wirkverbindung 10 und eine zwischengeschaltete Antriebskupplung 11 mit einem Sekundärantriebsglied 5 in leistungsübertragender Wirkverbindung. Das Sekundärantriebsglied, mit dem die Stellgrößeneinheit in Wirkverbindung steht, kann von jedem beliebigen Antriebsglied des im 2-WD Modus stillgelegten und im 4-WD Modus rotierenden Teils des Sekundärantriebsstrangs gebildet sein, beispielsweise von der Kardanwelle oder einer Eingangs- oder Ausgangswelle der Einrichtung zur Leistungsübertragung und/oder Leistungsverteilung der Antriebsleistung.

Die Antriebskupplung 11 ist bevorzugt eine berührungslos arbeitende, On-Demand schaltbare und bevorzugt elektrisch regelbare Magnet- oder Wirbelstromkupplung. Die Verwendung einer solchen das übertragbare Drehmoment begrenzenden Kupplung hat den Vorteil, dass diese - bedingt durch den berührungsfreien Lauf und das nur begrenzt übertragbare Drehmoment - auch als Druckbegrenzer fungiert, da der von der Hydraulikpumpe erzeugte Druck direkt abhängig von dem auf die Hydraulikpumpe übertragenen Drehmoment ist. Somit kann bei der Verwendung einer derartigen Antriebskupplung 11 auf ein Druckbegrenzungsventil verzichtet werden. Die Kupplung ist in Bezug auf ihr Drehmomentübertragungspotential lediglich derart auszulegen, dass der erzeugte Hydraulikdruck ausreicht, die Schiebemuffe bei einem Disconnect-Vorgang in die Disconnect-Position zu drängen. Ferner kann die über die Antriebskupplung auf die Hydraulikpumpe zu übertragende Leistung durch entsprechende Ansteuerung der Pumpe variiert werden und bei Bedarf bis auf Null reduziert werden.

Die beschriebene Anordnung ermöglicht - von den jeweiligen Schaltvorgängen abgesehen - einen Betrieb sowohl im 4-WD bzw. Connect-Modus als auch im 2-WD bzw. Disconnect Modus ohne nennenswerte Schleppverluste und ohne Verbrauch elektrischer Energie.

Während die vorstehend zu Figur 4 beschriebenen Komponenten und Vorgänge die Ausrückeinheit bzw. deren Funktion für den Disconnect-Vorgang betreffen, wird nachfolgend der Einrückvorgang bzw. die den Einrückvorgang betreffenden Komponenten und Vorgänge beschrieben.

Die als Vorspannelement fungierende Feder 9 speichert einen großen Teil der beim Ausrückvorgang in das System zur Realisierung des Kupplungsvorgangs eingebrachten Energie. Die Federkraft will die Schiebemuffe 6 aus der Disconnect-Position zurück in die Connect-Position drängen, wird aber durch einen als Rückhalteelement fungierenden Magnethalter 12 während des Betriebs im 2-WD Modus in der Disconnect-Position gehalten. Der Magnethalter 12 ist derart dimensioniert, dass dessen Rückhaltekraft größer ist als die entgegengesetzt wirkende Federkraft des Vorspannelements.

Der Magnethalter 12 ist elektrisch schaltbar weist einen bestrombaren Dauermagneten 13 auf. Um den Connect-Vorgang auszulösen, wird der Dauermagnet elektrisch angesteuert, wodurch er seine magnetische Kraft einbüßt. Die Rückhaltekraft wird so aufgehoben oder verringert sich und der Magnetschalter gibt die Rückstellkraft des Vorspannelements 9 frei, um den Connect-Vorgang auszulösen. Im Connect-Modus besteht zwischen dem Dauermagneten 13 und der diesen im Disconnect-Modus haltenden Komponente des Magnethalters 12 ein Luftspalt (Spaltweite zum Beispiel > 2 mm), dass auch bei Ausschalten der Bestromung der Dauermagnet nicht zurück in die Disconnect-Position "gezogen" wird.

Eine mit einem derartigen Magnethalter ausgestattete Rückhaltevorrichtung ermöglicht bei geringen Stromstärken (I < 2 A) eine hohe Rückhaltekraft (F > 1000 N), wobei nach derzeitigen Anforderungen davon auszugehen ist, dass der Magnethalter lediglich in der Lage sein muss, eine Federkraft des Vorspannelements größer 300 N sicher zu halten. Zudem hat ein derartiger Magnethalter nur einen geringen Bauraumbedarf.

Es sei erwähnt, dass bei Verwendung der in Figur 4 gezeigten, grundverlustfrei arbeitenden Antriebskupplung 11 auch eine leistungsübertragende Wirkverbindung der Ausrückeinheit mit den Primärantriebsgliedern 4 möglich ist, da auch in diesem Fall etwaige Schleppverluste vermieden werden.

Figur 5 zeigt eine leichte Abwandlung der in Figur 4 gezeigten Ausführungsform, bei der auf die Antriebskupplung, die - wie vorstehend beschrieben - auch die Funktion eines Druckbegrenzers wahrnimmt, verzichtet ist. Folglich ist Teil der Ausrückeinheit auch ein Druckbegrenzungsventil 16, das den von der Hydraulikpumpe 8 erzeugten Druck nicht über einen geeigneten Maximalwert ansteigen lässt. Um im Connect-Modus die Verlustleistung so gering wie möglich zu halten, wird der Druckbegrenzer in diesem Fahrmodus bevorzugt auf niedrigen Druck, bevorzugt auf Null, eingeregelt.

Ferner zeigt Figur 5 eine alternative Ausführungsform eines Rückhalteelements in Form einer Schaltraste 14, bei der eine elektromagnetisch aktuierte Sperrklinke in eine Rastnut eingreift und so die Schiebemuffe energiezuführungsfrei in der Disconnect-Position zu halten vermag. Auch hier ist vorgesehen, dass die Schaltraste 14 angesteuert werden muss, um die von dem Vorspannelement 9 ausgeübte Vorspannkraft für den Einrückvorgang freizugeben.

Selbstverständlich kann die Schaltraste 14 auch bei der in Figur 4 gezeigten Ausführungsform anstelle des dort dargestellten Magnetschalters 12 zum Einsatz kommen und umgekehrt.

Figur 6 zeigt eine Variante der Erfindung, bei der auf ein potentielle Energie vorhaltendes Vorspannelement 9, wie es in Figur 4 und Figur 5 gezeigt ist, verzichtet ist. Stattdessen kommt ein bi-stabiles Rückhalteelement 17 nach Art einer Tellerfeder zum Einsatz. Ein derartiges Rückhalteelement kann ausgehend von einer ersten, in sich stabilen Lage in eine zweite, in sich stabile Lage überführt werden, wenn es gegen einen inneren Widerstand über eine indifferent stabile Nulllage hinaus überdrückt wird. Somit ist auch bei der Verwendung eines derartigen Rückhalteelements eine insgesamt bi-stabile Kupplungsvorrichtung gewährleistet, die weder bei Betrieb des Kraftfahrzeugs im 2-WD Modus noch bei dessen Betrieb im 4-WD Modus einer Energiezufuhr zum Halten des jeweiligen Kupplungszustandes bedarf. Diese ist nur für den eigentlichen Kupplungsvorgang erforderlich.

Zur Ansteuerung einer hydraulischen Aktuierung ist wiederum eine Hydraulikpumpe 8 vorgesehen, die über eine zwischengeschaltete und das übertragbare Drehmoment begrenzende Antriebskupplung 11 mit einem Sekundärantriebsglied 5 (ggf. auch mit einem Primärantriebsglied 4) in leistungsübertragender Wirkverbindung gebracht werden kann. Die Hydraulikpumpe 8 steuert in dem in Figur 6 gezeigten Beispiel eine zweifach wirkende hydraulische Aktuierung an und weist ein hierfür erforderliches Steuerventil 15 auf.

Figur 7 zeigt schließlich eine Ausführungsform eines Systems zur Ansteuerung einer Kupplungsvorrichtung, bei der gegenüber der in Figur 6 gezeigten Ausführungsform auf eine Antriebskupplung 11, mittels der auch das auf die Hydraulikpumpe 8 übertragbare Drehmoment begrenzt werden kann, verzichtet ist. Auch hier ist daher ein Druckbegrenzungsventil vorgesehen, das den von der Hydraulikpumpe 8 erzeugten Druck nicht über einen geeigneten Maximalwert ansteigen lässt.

Wenn die die Kupplungsbetätigungseinrichtung derart ausgebildet ist, dass die Ausrückeinheit für die Bereitstellung der für die Betätigung der Kupplungsvorrichtung erforderlichen Kupplungsbetätigungskraft mit den Sekundärantriebsgliedern in Wirkverbindung steht - unabhängig davon, ob dies über eine Antriebskupplung 11 (Figur 4 und Figur 6) oder ohne eine derartige Antriebskupplung (Figur 5 und Figur 7) geschieht - kann außerdem vorgesehen sein, dass das Antriebsmoment, dass über die Wirkverbindung von den Sekundärgliedern zur Bereitstellung der Stellgröße für die Kupplungsbetätigungskraft abgegriffen wird, nach dem Ausrückvorgang als Bremsmoment für die Sekundärantriebsglieder eingesetzt ist. Insbesondere kann durch Einstellung einer hohen Stellgröße (etwa eines hohen Hydraulikdrucks) ein hohes Antriebsmoment angefordert werden, das nach Vollzug des Ausrückvorgangs als Bremsmoment wirkt. So kann selbst ein verlangsamtes Weiterrotieren der Sekundärantriebsglieder, das etwa aufgrund von hydrodynamischen Effekten in Lamellenkupplungen auftreten kann, Disconnect-Modus unterbunden werden.

Die Verwendung eines elektrisch ansteuerbaren Magnetschalters als Rückhalteelement und Bestandteil einer Kupplungsbetätigungseinrichtung, insbesondere als Bestandteil einer Einrückeinheit einer Kupplungsbetätigungseinrichtung, wird losgelöst von den Merkmalen der vorstehend beschriebenen Ausrückeinheit als eigenständige, gesondert beanspruchbare Erfindung angesehen.

### Bezugszeichenliste

- 1: Power-Takeoff-Unit (PTU)
- 2: Rear-Drive-Unit (RDU)
- 3: Kupplungsvorrichtung
- 4: Primärantriebsglieder
- 5: Sekundärantriebsglieder
- 6: Schiebemuffe (Eingriffsglied)
- 7: hydraulische Aktuierung
- 8: Stellgrößeneinheit (Hydraulikpumpe)
- 9: Vorspannelement (Federelement)
- 10: Wirkverbindung
- 11: Antriebskupplung
- 12: Rückhalteelement (Magnethalter)
- 13: Dauermagnet
- 14: Rückhalteelement (Schaltraste)
- 15: Steuerventil
- 16: Druckbegrenzungsventil
- 17: Bi-stabiles Rückhalteelement

## Patentansprüche

1. System zur Betätigung einer Kupplungsvorrichtung einer Einrichtung (1, 2) zur Leistungsübertragung und/oder Leistungsverteilung der Antriebsleistung eines Kraftfahrzeugs mit einem permanent angetriebenen Primärantriebsstrang und einem dem Primärantriebsstrang zuschaltbaren Sekundärantriebsstrang, wobei die Einrichtung zur Leistungsübertragung und/oder Leistungsverteilung (1, 2)
- Primärantriebsglieder (4) aufweist, die bei bestimmungsgemäßer Installation der Einrichtung (1, 2) zur Leistungsübertragung und/oder Leistungsverteilung am Kraftfahrzeug bei Fahrt permanent angetrieben oder geschleppt sind, und
- Sekundärantriebsglieder (5) aufweist, die bei bestimmungsgemäßer Installation der Einrichtung (1, 2) zur Leistungsübertragung und/oder Leistungsverteilung am Kraftfahrzeug im Bedarfsfall mittels einer Kupplungsvorrichtung (3) mit den Primärantriebsgliedern (4) verkoppelt oder von den Primärantriebsgliedern (4) entkoppelt werden können,
und wobei die Kupplungsvorrichtung (3) eine Kupplungsbetätigungseinrichtung mit einer Ausrückeinheit zur Entkopplung von Primärantriebsgliedern (4) und Sekundärantriebsgliedern (5) aufweist,
**dadurch gekennzeichnet, dass**
das System derart eingerichtet ist, dass die Ausrückeinheit für die Bereitstellung der für die Betätigung der Kupplungsvorrichtung (3) erforderlichen Kupplungsbetätigungskraft mit den Sekundärantriebsgliedern (5) in Wirkverbindung steht.

2. System nach dem Oberbegriff des Anspruchs 1, **dadurch gekennzeichnet, dass** eine Antriebskupplung (11) vorgesehen ist, die für die Bereitstellung der für die Betätigung der Kupplungsvorrichtung (3) erforderlichen Kupplungsbetätigungskraft eine Wirkverbindung zwischen den Primärantriebsgliedern (4) oder den Sekundärantriebsgliedern (5) und einer Stellgrößeneinheit (8) der Ausrückeinheit herzustellen vermag.

3. System nach einem der beiden vorhergehenden Ansprüche, **dadurch gekennzeichnet, dass** die Kupplungsvorrichtung (3) eine formschlüssig wirkende Kupplung ist.

4. System nach Anspruch 2, **dadurch gekennzeichnet, dass** die Antriebskupplung (11) eine On-Demand schaltbare und elektrisch ansteuerbare Kupplung ist.

5. System nach Anspruch 2 oder einem der Ansprüche 3 oder 4, sofern auf Anspruch 2 rückbezogen, **dadurch gekennzeichnet, dass** die Antriebskupplung (11) eine berührungsfrei arbeitende Kupplung ist.

6. System nach Anspruch 2 oder einem der Ansprüche 3 oder 5, sofern auf Anspruch 2 rückbezogen, **dadurch gekennzeichnet, dass** die Antriebskupplung (11) eine Magnetkupplung oder eine Wirbelstromkupplung ist.

7. System nach Anspruch 2 oder einem der Ansprüche 3 oder 6, sofern auf Anspruch 2 rückbezogen, **dadurch gekennzeichnet, dass** die Antriebskupplung (11) als Druckbegrenzungseinrichtung für eine Hydraulikdruck erzeugende Stellgrößeneinheit (8) fungiert.

8. System nach einem der vorhergehenden Ansprüche, **dadurch gekennzeichnet, dass** eine Einrückeinheit vorgesehen ist, die ein für den Einrückvorgang potentielle Energie vorhaltendes Vorspannelement (9) aufweist.

9. System nach einem der vorhergehenden Ansprüche, **dadurch gekennzeichnet, dass** die Kupplungsvorrichtung (3) eine Rückhalteelement (12, 14, 17) umfasst, das ein den Formschluss der Kupplung herstellendes Eingriffsglied (6) in dauerhaft ausgerückter Position zu halten vermag.

10. System nach einem der vorhergehenden Ansprüche, **dadurch gekennzeichnet, dass** die Kupplungsvorrichtung (3) als bi-stabile Kupplungsvorrichtung ausgebildet ist.

11. System nach einem der beiden vorhergehenden Ansprüche, **dadurch gekennzeichnet, dass** das Rückhalteelement von einem elektrisch ansteuerbaren Magnethalter (12) oder einer elektrisch ansteuerbaren Schaltraste (14) gebildet ist.

12. System nach einem der vorhergehenden Ansprüche, **dadurch gekennzeichnet, dass** das Rückhalteelement (12, 14, 17) derart eingerichtet ist, dass bei Betrieb des Kraftfahrzeugs mit ausgerückter oder mit eingerückter Kupplung der jeweilige Schaltzustand der Kupplungsvorrichtung dauerhaft energiezuführungsfrei gehalten werden kann.

13. System nach Anspruch 9, 10 oder 12, **dadurch gekennzeichnet, dass** ein bi-stabiles Rückhalteelement (17) vorgesehen ist, das ausgehend von einer ersten, in sich stabilen Lage in eine zweite, in sich stabile Lage überführt werden kann, wenn es gegen einen inneren Widerstand über eine indifferent stabile Nulllage hinaus überdrückt wird.

14. Einrichtung zur Leistungsübertragung und/oder Leistungsverteilung der Antriebsleistung eines Kraftfahrzeugs mit einem System zur Betätigung einer Kupplungsvorrichtung nach einem der vorhergehenden Ansprüche.

## Claims

1. System for the actuation of a clutch device of an installation (1, 2) for transferring and/or distributing the drive power of a motor vehicle, with a permanently driven primary drive train and a secondary drive train which can be connected to the primary drive train, wherein the installation for transferring and/or distributing power (1, 2)
- has primary drive elements (4) which, when the installation (1, 2) for transferring and/or distributing drive power is appropriately installed in the motor vehicle, are permanently driven or dragged during travel, and
- has secondary drive elements (5) which, when the installation (1, 2) for transferring and/or distributing drive power is appropriately installed in the motor vehicle, can, when required, be coupled with or decoupled from the primary drive elements (4) by means of a clutch device (3),
and wherein the clutch device (3) has a clutch actuation device with a disengaging unit for decoupling primary drive elements (4) and secondary drive elements (5),
**characterised in that**
the system is arranged such that the disengaging unit for providing the clutch actuation force necessary for actuating the clutch device (3) is in operative connection with the secondary drive elements (5).

2. System in accordance with the preamble of claim 1, **characterised in that** a drive clutch (11) is provided which is able to create an operative connection between the primary drive elements (4) or the secondary drive elements (5) and a unit (8) for generating the actuating variable of the disengaging unit in order to provide the clutch actuation force necessary for the actuation of the clutch device (3).

3. System according to either of the two foregoing claims, **characterised in that** the clutch device (3) is a positively acting clutch.

4. System according to claim 2, **characterised in that** the drive clutch (11) is one which is switchable on demand and electrically controllable.

5. System according to claim 2 or either of claims 3 or 4, insofar as they refer to claim 2, **characterised in that** the drive clutch (11) is one acting in a contactless manner.

6. System according to claim 2 or either of claims 3 or 5, insofar as they refer to claim 2, **characterised in that** the drive clutch (11) is a magnetic clutch or an eddy current clutch.

7. System according to claim 2 or either of claims 3 or 6, insofar as they refer to claim 2, **characterised in that** the drive clutch (11) functions as a pressure relief device for a unit (8) for generating the actuating variable which generates hydraulic pressure.

8. System according to any one of the foregoing claims, **characterised in that** an engagement unit is provided which has a preloaded element (9) charged with potential energy for the engagement process.

9. System according to any one of the foregoing claims, **characterised in that** the clutch device (3) comprises a retention element (12, 14, 17) which able to hold an engagement member (6) producing the positive locking fit of the clutch in a sustained disengaged position.

10. System according to any one of the foregoing claims, **characterised in that** the clutch device (3) is formed as a bi-stabile clutch device.

11. System according to any one of the foregoing claims, **characterised in that** the retention element is formed by an electrically controllable magnetic retainer (12) or an electrically controllable detent switch (14).

12. System according to any one of the foregoing claims, **characterised in that** the retention element (12, 14, 17) is arranged such that, when the motor vehicle is operated with a disengaged or engaged clutch, the respective switched status of the clutch device can be retained in a sustained energy-free condition.

13. System according to claim 9, 10 or 12, **characterised in that** a bi-stabile retention element (17) is provided which can be transferred from a first intrinsically stable condition to a second intrinsically stable condition when it is pushed against internal resistance beyond a neutrally stable zero position.

14. Device for transferring and/or distributing the drive power of a motor vehicle with a system for actuating a clutch device according to any one of the foregoing claims.

## Revendications

1. Système destiné à l'actionnement d'un dispositif d'accouplement d'un équipement (1, 2) pour la transmission de puissance et/ou la répartition de puissance de la puissance d'entraînement d'un véhicule avec une transmission primaire entraînée en permanence et une transmission secondaire enclenchable à la transmission primaire, l'équipement pour la transmission de puissance et/ou la répartition de puissance (1, 2) présentant
- des éléments de transmission primaire (4) qui sont entraînés ou remorqués en permanence en roulant pour la transmission de puissance et/ou la répartition de puissance sur le véhicule lors d'une installation conforme de l'équipement (1, 2), et présentant
- des éléments de transmission secondaire (5) qui peuvent être couplés aux éléments de transmission primaire (4) ou désaccouplés des éléments de transmission primaire (4) si nécessaire au moyen d'un dispositif d'accouplement (3) pour la transmission de puissance et/ou la répartition de puissance sur le véhicule lors d'une installation conforme de l'équipement (1, 2),
- et le dispositif d'accouplement (3) présentant un système d'actionnement d'embrayage avec une unité de débrayage pour le désaccouplage d'éléments de transmission primaire (4) et d'éléments de transmission secondaire (5),
**caractérisé en ce que**
le système est équipé de telle manière que l'unité de débrayage prend en charge la force d'actionnement d'embrayage nécessaire à l'actionnement du dispositif d'accouplement (3) en liaison avec les éléments de transmission secondaire (5).

2. Système selon le préambule de la revendication 1, **caractérisé en ce qu'**un accouplement d'entraînement (11) est prévu pour établir une liaison d'actionnement entre les éléments de transmission primaire (4) ou les éléments de transmission secondaire (5) et d'une unité de grandeurs de réglage (8) pour prendre en charge la force d'actionnement d'embrayage nécessaire à l'actionnement du dispositif d'accouplement (3).

3. Système selon l'une des deux revendications précédentes, **caractérisé en ce que** le dispositif d'accouplement (3) est un accouplement agissant par forme complémentaire.

4. Système selon la revendication 2, **caractérisé en ce que** l'accouplement d'entraînement (11) est un coupleur commutable sur demande et à commande électrique.

5. Système selon la revendication 2 ou l'une des revendications 3 ou 4 à condition de se référer à la revendication 2, **caractérisé en ce que** l'accouplement d'entraînement (11) est un coupleur fonctionnant sans contact.

6. Système selon la revendication 2 ou l'une des revendications 3 ou 5 à condition de se référer à la revendication 2, **caractérisé en ce que** l'accouplement d'entraînement (11) est un coupleur magnétique ou un accouplement à courant de Foucault.

7. Système selon la revendication 2 ou l'une des revendications 3 ou 6 à condition de se référer à la revendication 2, **caractérisé en ce que** l'accouplement d'entraînement (11) fonctionne comme un dispositif de limitation de pression pour une unité de grandeurs de réglage (8) générant de la pression hydraulique.

8. Système selon l'une des revendications précédentes, **caractérisé en ce qu'**une unité d'embrayage présentant un élément de précontrainte (9) maintenant de l'énergie potentielle pour le processus d'embrayage, est prévue.

9. Système selon l'une des revendications précédentes, **caractérisé en ce que** le dispositif d'accouplement (3) comprend un élément de retenue (12, 14, 17) qui retient un élément de prise (6) produisant un engagement positif de l'accouplement en position débrayée permanente.

10. Système selon l'une des revendications précédentes, **caractérisé en ce que** le dispositif d'accouplement (3) est formé comme un dispositif d'accouplement bistable.

11. Système selon l'une des deux revendications précédentes, **caractérisé en ce que** l'élément de retenue est formé d'un support magnétique (12) à commande électrique ou d'un sélecteur de vitesse (14) à commande électrique.

12. Système selon l'une des revendications précédentes, **caractérisé en ce que** l'élément de retenue (12, 14, 17) est équipé de telle manière que l'état de commutation respectif du dispositif d'accouplement peut être maintenu sans alimentation en énergie continue pendant le fonctionnement du véhicule avec un embrayage engagé ou désengagé.

13. Système selon la revendication 9, 10 ou 12, **caractérisé en ce qu'un** élément de retenue bistable (17) est prévu, ledit élément de retenue bistable pouvant être transféré à partir d'une première position stable en soi vers une deuxième position stable en soi lorsqu'il est soumis à une pression excessive contre une résistance interne sur une position zéro stable indifférente.

14. Équipement pour la transmission de puissance et/ou la répartition de puissance de la puissance d'entraînement d'un véhicule avec un système d'actionnement d'un dispositif d'accouplement selon l'une des revendications précédentes.
